Europäisches Patentamt

European Patent Office

Office européen des brevets

(11) Publication number: **0 304 640**
**A2**

## EUROPEAN PATENT APPLICATION

(21) Application number: 88111924.2

(22) Date of filing: 25.07.88

(51) Int. Cl.4: **F16F 9/46**

(30) Priority: 22.08.87 GB 8719884

(43) Date of publication of application:
**01.03.89 Bulletin 89/09**

(84) Designated Contracting States:
**DE ES FR GB IT**

(71) Applicant: **Eaton S.A.M.**
**17 Avenue Prince Hereditaire Prince Albert**
**Monaco 98000(MC)**

(72) Inventor: **de Raco, Maurice**
**Quartier Saint-Mathieu Chemin du Piechal**
**F-06130 Grasse(FR)**
Inventor: **Blaignon Perbet, Patrick**
**30, Avenue Sainte Marguerite**
**F-06150 Cannes la Bocca(FR)**

(74) Representative: **Douglas, John Andrew**
**Eaton House Staines Road**
**Hounslow Middlesex TW4 5DX(GB)**

(54) **Electrically operated fluid valve.**

(57) A piloted valve especially for manually switching hydraulic vehicle suspension units between hard and soft modes, and providing a third mode for very bumpy terrain.

A volume 8 (which may extend around the armature 9, 10), gradually fills up through a low-flow path 7A, to exert a downward pressure on a first flap 6.

A pilot channel 16 is opened by energising coil 12, whereon an armature in two parts 9 and 10 closes up, lifting conical needle 8. The first flap 6 then rises through fluid pressure acting from below, because the downward pressure is released through the pilot channel 16. This is the soft suspension mode, because import port 3 from the unit connects with output port 21 and a reservoir, via the now uncovered seat 18. The hard suspension mode exists when the valve is effectively closed.

The ultra-soft or emergency mode is set up by the vehicle wheel hitting bumps, or other high pressure shocks, when the soft suspension mode is already in existence. Sudden shocks or high pressure P1 at the input port 3 then increases pressure P3 directly via uncovered seat 18, and this pushes down final flap 22 against an initial high bias exerted by six radial springs 25 against an inclined annular surface 27.

A bypass path through 23 is then opened. The final flap has a hole 29 by which fluid passes in the soft suspension mode. But bypass path 23 is even faster, and the "shock" moade is therefore very soft.

figure 1

## ELECTRICALLY OPERATED FLUID VALVE

The present invention relates to an electrically operated fluid valve in which an internal passageway between an input port and an output port can be suddenly opened or closed to substantial flow rates , e.g. of hydraulic oil.

It is desirable to minimize the electrical power requirement, by using it only to open a pilot channel and arranging a main channel to open in response to fluid pressure acting against return bias. Conversely, electrically closing the open pilot channel should cause the return bias to overcome the fluid pressure, and thereon to suddenly close the main channel.

Resulting from the invention, a high flow mode can be initiated in two stages, due to provision of an electrically controlled pilot channel and a pressure controlled main channels which depends also on the pilot channel being already opened. The pilot channel is biased normally closed, as also is the main channel.

According to a preferable feature, the final return bias can have two spring systems, one of which ceases to apply return bias after the main channel has begun to open. The actuation may be by a solonoid armature in two axially spaced parts biased apart by said intermediate return bias eg according to our Application GB-8619868.

The term "final" is used for components or stages which finalize the sudden and complete opening of the valve.

The inventive valve is particularly useful for providing driver-selectable suspension hardness on a vehicle between hard and soft modes. The soft mode should be fully initiated, according to the concept of the present inventive valve, only when the fluid pressure in a suspension unit is high (eg hitting a bump in the road).

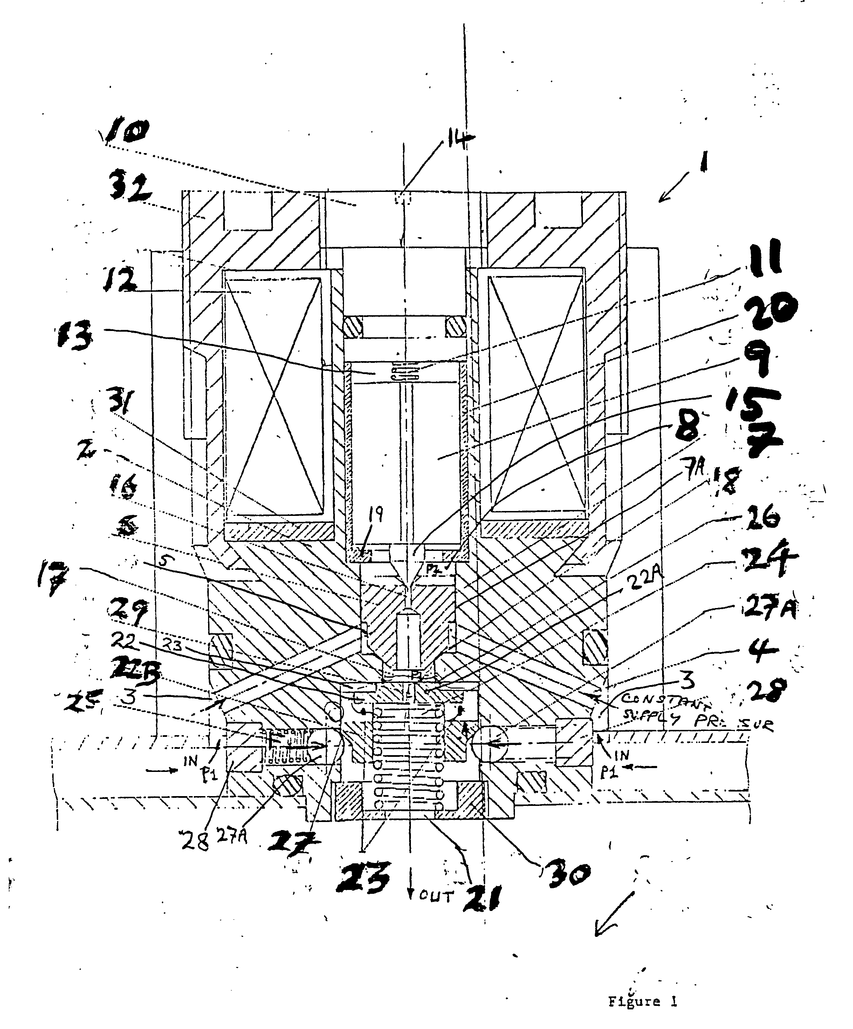

Further features will appear from the following description with reference to the sole Figure, which is a diametrical sectional elevation on a valve in its unenergized or rest state.

Referring to the drawing, a valve 1 has a body 2 in which is an annular input port 3 from which a plurality of (eg eight) almost radial input channels 4 lead to an internal annular collecting volume 5. Volume 5 is one or more recesses or preferably a portion of reduced diameter from a cylindrical intermediate valve flap 6, which slides in a guide 7 in body 2.

Although not shown, there is a minimum clearance between valve flap 6 and guide 7 enough to allow a significant but very small low-flow fluid path 7A from the volume 5 into a space 8 enclosed above the flap 6 by an armature, or at least by a movable part 9 thereof.

In space 8 a varying pressure P2 is considered to prevail. After a longish period of feed through low-flow path 7A, P2 will equal P1, the average value of P1 that is, which is the pressure (usually varying sharply) supplied to the input port 3 and volume 5. The main intended use of valve 1 is in the fluid circuit of a suspension unit, subject to the usual irregularities at the wheels of a vehicle.

The armature may have a fixed part 10 separated from the moving part 9 by a compression spring 11 which provides intermediate return bias, and an actuating coil 12 which, when energised, forces the armature parts together. The starting gap 13 between them determines the starting electromagnetic forces for given coil energisation, and can be regulated by a screwdriver or similar groove 14 (the fixed portion 10 screwing in or out of the valve housing or body). A pilot closure member 15 moving with the movable armature 9 has a seating on the upper end of an axial pilot channel 16 which leads to an intermediate output volume 17 at which a varying pressure P3 exists. The pilot channel 16 when opened allows faster flow than low-flow path 7A does. Pressure P3 can vary due to several factors.

Intermediate flap 6 has a seat 18 which allows relatively fast direct flow from channel 3 when the flap is lifted, so that pressure P3 is then raised relatively rapidly to the same value as P1 at any instant.

When armature part 9 is down, flap 6 is held down somewhat by return spring 11, but mainly by the pressure P2 at volume 8, which gradually rises towards equality with P1. When part 9 and closure 15 rises, P2 falls because flow through channel 16 exceeds that through low-flow path 7A. The pressure P1 acting at volume 5 now forces the flap upwards, off seating 18, whereby P3 increases to equality with the recent average of P1, and maintains the flap up.

A skirt 19 extension of armature guide 20 or other means may provide a stop to prevent the flap rising enough to abut the closure member 15 in its raised position, having regard to the height of gap 13. Intermediate pilot channel 16 must be prevented from being re-closed at this time; it should close only when the solonoid de-energizes.

The output port of the valve is at 21. It only receives at this time the fluid leaking through annular low-flow path 7A, and through pilot channel 16, until the seating 18 is no longer obstructed by the flap 6 now raised as described. Then a second, final flap 22 is driven downwards by a subsequent action described below, to cause one or more main channels 23 to open, and communicate output port 21 directly with input 3, as follows.

Final flap 22 has an upper part 22A which is biased directly by an axial spring 24 and indirectly by six radial springs 25, eg via balls 25A, against a seating 26 on valve body 2. The radial springs (adjustable if desired by threaded bases 28) act on the inclined peripheral surface 27 of a lower part 22B rigidly attached to part 22A of flap 22, but only when the flap is seated and the inclined surface 27 is presented to the balls.

Once the intermediate flap 6 has been raised and volume 17 is open to the input, a significant amount of fluid passes through an axial lower channel 29 centrally bored through flap 22. This is the first significant flow through lower channel 29 which has only moderate diameter, i.e. smaller than input channels 4 and smaller than the now still closed main channels 23, although larger than pilot channel 16; therefore due to the only moderate diameter of channel 29, pressure P3 in volume 17 now builds up towards P1 in value, whatever that value may be at any moment. If P1 is not very high at this instant, it will be too small to overcome the combined effect of the axial spring 24 and the radial springs 25, of which the latter contribute about 90% of the upward, closing force on final flap 22. Therefore the valve is open to an extent limited by lower channel 29 (low flow mode). If P1 increases above a threshold, however, e.g. of 25 bars, it rapidly overcomes the upward combined pressures of the two spring systems, so that flap 22 descends (e.g. until it comes against an annular stop 30) and fluid takes a preferential route through large apertures formed between flap portions 22A, 22B to provide said final main channels 23. As soon as flap 22 starts to descend, the radial springs cease to act on it.

The output port 21 is then connected to the input to a much less limited extent, ie with very little resistance. (high flow mode).

The lower, limited channel 29 should be large compared with the intermediate pilot channel 16, so that the channel 16 discharges quickly in the intermediate stage without building up undue opposing pressure P3 at volume 17; however channel 29 must be small enough to develop soon enough pressure P3 at the final stage close enough to P1 in value. Then when P1 exceeds the threshold, P3 is effective rapidly to overcome the radial spring bias on the final flap 22.

The radial springs 25 have a crucial effect on the suddenness or brusqueness of the final action to high flow mode, in that, once the inclined surfaces 27 descend below the balls on initial opening of the final flap, the balls act on a vertical surface, the radial springs cease to have upward, closing effect, and only the 10% or so contribution to the closing effect of the axial coil spring has to be overcome. The high flow mode opening is therefore all the more rapid and sudden.

Shut-down from high flow mode can also be abrupt when zero flow is required, because electrical de-energization causes the closure member 15 to close the intermediate pilot channel 16 immediately. Before the flap descends, space 8 is very small and pressure P2 builds up appreciably quickly through annular low-flow path 7A. The combined effect of P2 and the released return spring 11 drive intermediate flap 6 downwards. Flap 6 thus is re-seated at 18, pressure P3 is rapidly reduced (being now connected only to the output port 21) and return spring 24 (although not as strong as radial springs 25) suffices to re-close the final flap 22. The valve thus exhibits two opening actions in rapid succession, assisted by fluid pressure when P1 is sufficiently high, with minimum solenoid power, to achieve the high flow mode. If P1 is less high, only one opening action occurs (flap 6 rising), and the low flow mode is set up.

Partial shut-down from high to low flow mode will occur if P1 drops below a value, which has to be much lower than the threshold value, because P3 is only opposing the weaker, coil return spring 24 when the final flap is open. The high flow mode is maintained, then, down to a much lower P1 pressure than was required to initiate the high flow state (against the radial springs).

The valve may be used, for example, to equip a vehicle suspension with a very rapid convertability, manual or automatic, from hardness to softness and vice-versa, without undue electrical output.

The valve can be mounted on each suspension damper or shock-absorber unit of a vehicle, so that the driver can select the high or low resistance of fluid flow path normally used for fluid damping, by opening or closing the valve solonoid 12. It is emphasized that, since the pressure P1 depends on the ground surface or other irregularity, or on the way such surface is driven over, the flap 22 may sometimes never be open because P1 may not reach the required threshold, which may be 25 bars. Then the fluid will pass to port 21 only through restricted channel 29. Both P2 and P3 will always depend on P1.

Other working details of the embodiment are, the magnetic circuit may be a lower annular piece 31, an upper housing piece 32 crimped at 33 to the non-magnetic body 2, and the two-part armature. Only the lower armature part 9 need be guided by low-friction non-magnetic guide 20; the latter providing the limit stop 19 for the intermediate flap as aforesaid. Part 10 may be a magnetic circuit member, too, and only prototypes will in practice be adjustable. P2 the pressure in space 8, may communicate all round the armature and in further spaces above it, if speed of reaction of the first opening stage is still satisfactory. The time for this stage is preferred, in typical hydraulic suspension valve embodiments, to be 4 milliseconds.

Presently, preferred force of each radial spring 25 is 1500gm, there being six; but the one axial spring 24 need only supply 500gm closing force (i.e. when pressure is low). Spring 11 need only be strong enough to close pilot channel 16 reliably.

## Claims

1. A pilot controlled valve having zero flow, low flow and high flow modes, between an input port (3) and an output port (21) within the valve, wherein a volume (17) is connected:
firstly, to the input port (3) conditionally via a first seat (18) associated with an intermediate flow-path flap (6) and a relatively large channel (4):
secondly, conditioned by an external control to a space (8) which is confined by said intermediate flap via a relatively small pilot channel (16), and
thirdly, to the output port (21) continuously via a moderately sized channel (29); and wherein
said confined space (8) is supplied continuously from the input port (3) by a low-flow path (7A) which is small even compared with said small pilot channel (16).

2. A pilot controlled valve according to Claim 1 characterised by a final flow-path flap (22) arranged to adopt an open condition on a threshold pressure (P3) being developed in said volume (17), and thereby to open a larger channel (23) than said moderate channel (29), effectively bypassing this (29) to said output port (21).

3. A pilot controlled valve according to Claim 2 characterised in that the final flap (22) is biased closed against its seat (26) by a spring system (25, 25A, 27 and 24), which is arranged to apply a high bias to resist an initial opening movement of the final flap and then to apply a low bias after said initial opening movement, until the next re-closure of said final flap (22).

4. A pilot controlled valve according to Claim 3 characterised in that the final flap has a first portion (22A) always acted on generally in the direction of its opening movement by a first spring (24), and a second portion 22B having an inclined surface 27 of only limited extent and inclined to said direction also, to coact initially with second springs (25) acting in a further direction also inclined to that of the opening movement of the final flap, so that only the first spring (24) applies bias after initial opening or during re-closure, and applies such bias at a pressure relatively low compared with said threshold pressure.

5. A pilot controlled valve according to Claim 4 characterised in that the first spring is a coil spring (24) acting axially within the valve on the final flap, and the second spring comprises multiple radial springs (25) acting on a annular surface of the flap inclined to the axis and to the radii of the valve.

87 - MON - 700
82

Figure 1